# EUROPÄISCHE PATENTANMELDUNG

(11) **EP 1 338 995 A1**
(43) Veröffentlichungstag der Anmeldung: **27.08.2003**
(21) Anmeldenummer: 02003252.0
(22) Anmeldetag: 21.02.2002
(51) Int. Cl.: G06F 17/60

(54) **Kundenspezifisches Foto-Bildinhaltsprofil**

(71) Anmelder: GRETAG IMAGING Trading AG, 5430 Wettingen (CH)
(72) Erfinder: Franzke, Dieter, 5210 Windisch (CH); Keller, Guido, 8106 Adlikon (CH)
(74) Vertreter: Schwabe - Sandmair - Marx

(57) **Zusammenfassung**

Die Erfindung betrifft ein Verfahren zur Erzeugung eines Foto-Kundenprofils mittels einer Bilddatenverarbeitung mit den Schritten: ein Kundenidentifizierer wird empfangen; Bilddaten, die fotografische Bilder darstellen und dem Kundenidentifizierer zugeordnet sind, werden empfangen; die Bilddaten werden auf ihren Bildinhalt analysiert; basierend auf den analysierten Bildinhalten wird ein kundenspezifisches Bildinhaltprofil erstellt.

## Beschreibung

Die vorliegende Erfindung betrifft die Erzeugung eines kundenspezifischen Foto-Bildinhaltsprofils sowie die Verarbeitung von (digitalen) Bilddaten, beispielsweise mittels eines Computersystems.

Foto-Bildinformation wird in Form von beispielsweise Filmen (unentwickelte Filme, Negative und Dias) oder digitalen Bilddaten (Smart Cards, Video-CDs, DVDs etc.) zu Fotoshops oder -labors übermittelt. Dort wird die Bildinformation digitalisiert und verarbeitet. Die aufbereiteten Bilddaten und/oder Ausdrucke der Bilder werden zu dem Kunden zurückgeleitet.

Bislang wurde die in den Bildern enthaltene Information, also der Bildinhalt, nicht genutzt, um dem Kunden zusätzliche, auf ihn zugeschnittene Information zukommen zu lassen. Bei dieser zusätzlichen Information kann es sich insbesondere um Werbeinformation, aber auch z. B. um Tipps zur Vermeidung fotografischer Fehler handeln.

Die vorliegende Erfindung betrifft die Erzeugung eines auf fotografischer Bildinformation basierenden, kundenspezifischen Bildinhaltprofils, basierend auf dem kundenspezifische typische Bildinhalte (beispielsweise Motive wie Strandurlaub, Skiurlaub, Haustiere, Kleinkinder etc. und/oder Fotografietechniken bzw. Fehler beim Fotografieren wie Unterbelichtung, Überbelichtung, Unschärfe, Verwacklung etc.) erfasst werden.

Es ist eine neue, bisher nicht da gewesene Aufgabe der vorliegenden Erfindung, ein derartiges kundenspezifisches Bildinhaltsprofil zu erzeugen.

Vorstehende Aufgabe wird durch die Gegenstände der unabhängigen Ansprüche 1, 7, 8, 9 und 10 gelöst. Vorteilhafte Weiterbildungen ergeben sich aus den abhängigen Ansprüchen.

Ein Verfahren zur Erzeugung eines Bildinhaltsprofils, das auf fotografischer Bildinformation beruht, kurz "Foto-Bildinhaltsprofil", umfasst vorzugsweise mehrere Schritte. In einem Schritt wird vorzugsweise der Kundenidentifizierer empfangen. Der Kundenidentifizierer ist so gestaltet, dass er die Identifikation des Kunden erlaubt. Insbesondere erlaubt der Kundenidentifizierer den Zugriff auf eine Datenbank, in der kundenspezifische Daten gespeichert sind. Weiter werden bei dem Verfahren Bilddaten, insbesondere digitale Bilddaten, die fotografische Bilder darstellen, z.B. via Handy ("mobil phone"), z.B. in einem Fotolabor oder in einer zentralen Fotodatenbank, empfangen, basierend auf denen das Foto-Bildinhaltsprofil erstellt werden soll. Die Bilddaten sind vorzugsweise dem Kundenidentifizierer zugeordnet, um somit eine Zuordnung des basierend auf den empfangenen Bilddaten erstellten Bildinhaltsprofils zu den einzelnen Kunden zu ermöglichen, das Bildinhaltsprofil also kundenspezifisch zu machen.

Die Bilddaten können zweidimensionale oder dreidimensionale Bilder darstellen. Die fotographischen Bilder können Einzelbilder oder bewegte Bilder sein. Die Bilder können beispielsweise von einem Handy ("mobil phone", "cellular phone"), das z.B. auch als Kamera ausgebildet ist, zu einer zentralen Fotodatenbank übertragen werden, bei der das erfindungsgemäße Verfahren durchgeführt wird, und dann beispielsweise zu einem anderen Handy weitergeleitet werden.

Erfindungsgemäß werden die (dem Kundenidentifizierer zugeordneten) Bilddaten auf ihren Bildinhalt analysiert. Die Analyse erfolgt dabei vorzugsweise bildweise.

Die Bildinhalte (insbesondere Motive und/oder Fotografietechniken/-fehler), die aus den Bilddaten gewonnen wurden, werden vorzugsweise verwendet, um ein Bildinhaltsprofil zu erstellen. Da die Bilddaten einem Kundenidentifizierer zugeordnet sind, ist das so erhaltene Bildinhaltsprofil kundenspezifisch. Ein Bildinhaltsprofil basiert also auf mindestens einem Bild, vorzugsweise einer Vielzahl von Bildern.

Die (bildweise) Analyse der Bilddaten kann auf verschiedene Bildanalyseverfahren zurückgreifen, wie sie bereits bekannt sind. Beispielsweise können die Bilder einer Mustererkennung unterzogen werden, um Motive, wie Menschen, Tiere und Gegenstände zu erkennen. Mittels Mustererkennung können beispielsweise typische Haustiere, wie Hunde oder Katzen, auf den Bildern erkannt werden. Das Bildinhaltsprofil würde somit umfassen, dass der Kunde beispielsweise Katzen fotografiert, also Katzen als Bildinhalt hat. Weiter können die Farbwerte der Bilder auf charakteristische Farben wie menschliche Hautfarbe, himmelblau, strandgelb, schneeweiß etc. untersucht werden, um die Erkennung des Bildinhalts (insbesondere Motivs oder Fotografietechniken) durchzuführen oder zu unterstützen. Kombiniert mit Mustererkennung lässt sich so beispielsweise erkennen, dass der Bildinhalt einen Skifahrer oder Skiurlaub betrifft. Das kundenspezifische Bildinhaltsprofil würde somit beispielsweise Motive wie Katzen und Skiurlaub umfassen. Über eine Analyse der Helligkeitsverteilung der einzelnen Bildpunkte lässt sich beispielsweise auch bestimmen, ob der Bildinhalt auf einer über- oder unterbelichteten Aufnahme beruht. Als kundenspezifischer Bildinhalt kann dann beispielsweise die Klassifizierung "überbelichtet" oder "unterbelichtet" dem Kundenidentifizierer zugeordnet abgespeichert werden. Aus dem Bildinhalt lässt sich also auf Fotografietechniken oder Fehler bei der Aufnahme schließen.

Vorzugsweise werden die Ergebnisse der verschiedenen Analyseverfahren zusammengefasst, um ein Gesamtanalyseergebnis beispielsweise basierend auf Mustererkennung und Erkennung charakteristischer Farben ("memory colors") zu erzielen. Basierend auf diesem Gesamtanalyseergebnis wird dann der Bildinhalt bestimmt.

Die Bestimmung des Bildinhalts kann beispielsweise so erfolgen, dass das Analyseergebnis (beispielsweise Gesamtanalyseergebnis) mit Analyseergebnissen verglichen werden, die erhalten werden, wenn man Bilder mit typischem Bildinhalt (beispielsweise Bilder einer Katze oder eines Skiurlaubs) analysiert. Je nach Grad der Ähnlichkeit kann dann ein Belichtungswert und ein Wahrscheinlichkeitswert berechnet werden, dass das Bild einen bestimmten Bildinhalt zeigt. Durch die Analyse mehrerer Bilder kann so ein Bildinhaltsprofil erstellt werden. Das Bildinhaltsprofil kann beispielsweise so gestaltet werden, dass aus ihm hervorgeht, welche typischen Bildinhalte bei dem Kunden mit welcher Häufigkeit oder Wahrscheinlichkeit vertreten sind, also welche Motive und/oder Fotografietechniken/Fotografiefehler überwiegen.

Um die Bestimmung des Bildinhalts durchzuführen, können die Analyseergebnisse beispielsweise mittels einer Nachschlagtabelle ausgewertet werden, die basierend auf Analyseergebnissen von typischen Bildinhalten erzeugt wurde.

Vorzugsweise wird vorab eine Vielzahl typischer Bildinhalte festgelegt, wobei aber ein Bild mehr als einen einzigen typischen Bildinhalt enthalten kann (also beispielsweise sowohl Strand als auch Kleinkind). Das kundenspezifische Bildinhaltsprofil spiegelt wider, welche Bildinhalte aus der Vielzahl der vorgegebenen Bildinhalte kundenspezifisch sind. Um kundenspezifische Abweichungen des Bildinhaltsprofils vom Durchschnitt zu erkennen, kann das kundenspezifische Bildinhaltsprofil mit einem statistisch ermittelten durchschnittlichen Bildinhaltsprofil ermittelt werden. Die Abweichungen sind dann für den jeweiligen Kunden als charakteristisch anzusehen.

Erfindungsgemäß kann das kundenspezifische Bildinhaltsprofil verwendet werden, um ein Kundeninformationsprofil zu bestimmen. Das Kundeninformationsprofil ist so ausgelegt, dass es Interessengebiete des Kunden widerspiegelt, die sich aus dem Bildinhaltsprofil ergeben. Zeigt das Bildinhaltsprofil (insbesondere das Motivprofil) beispielsweise einen Skiurlaub, so kann dem Kunden Information über Skiausrüstung oder Hotels und Pensionen in Skigebieten zugesandt werden. Um dies zu erzielen, wird vorzugsweise das Bildinhaltsprofil einer Kundeninformationsdatenbank zugerührt, in der Bildinhalte, die durch das Bildinhaltsprofil bezeichnet sind, Kundeninformationen zugeordnet sind, die typischerweise für Kunden mit diesem Bildinhaltsprofil von Interesse sind. Mit Hilfe des Bildinhaltsprofils lässt sich somit von der Kundeninformationsdatenbank ein Kundeninformationsprofil abrufen, das (eine Vielfalt von) Kundeninformationen definiert, die für den Kunden (vermutlich) von Interesse sind.

Mit Hilfe dieses Kundeninformationsprofils können dann aktuelle Datenbanken mit aktuellen Daten abgefragt werden, um abhängig von dem Kundeninformationsprofil aktuelle, auf das Kundeninteresse zugeschnittene Daten (beispielsweise ein aktuelles Angebot für ein Skiwochenende) zu erhalten, die dann an den Kunden gesendet werden können.

Vorzugsweise wird obiges Verfahren in einem Netzwerk, insbesondere Computernetzwerk (z.B. Internet oder LAN oder drahtloses Handynetzwerk) durchgeführt. Ist ein Kunde Online, so wird dies erkannt und das ihm zugeordnete Kundeninformationsprofil der aktuellen Datenbank zugeführt, um diese nach aktuellen Daten, die sich mit dem Kundeninformationsprofil decken, abzufragen. Diese aktuellen Daten werden dann an das Terminal gesendet, an dem der Kunde Online ist.

Die aktuelle Kundeninformation kann insbesondere Werbung umfassen, die an geeignete Kunden zu senden ist.

Um das Kundeninformationsprofil aus dem Bildinhaltsprofil zu bestimmen, kann beispielsweise eine Nachschlagtabelle eingesetzt werden, aus der hervorgeht, bei welchen Bildinhalten typischerweise welches Informationsbedürfnis bei einem Kunden besteht. Dies kann z.B. empirisch durch Marktstudien und/oder Umfragen ermittelt werden.

Das Bildinhaltsprofil und somit das Kundeninformationsprofil können basierend auf von dem Kunden stammenden, neu empfangenen Bilddaten ständig aktualisiert werden.

Weitere Vorteile und Merkmale der vorliegenden Erfindung gehen aus den beigerügten Figuren hervor.
- Fig. 1: zeigt den schematischen Ablauf zur Erzeugung eines Bildinhaltsprofils.
- Fig. 2: zeigt den schematischen Ablauf zum Übersenden kundenspezifischer, aktueller Information an den Kunden basierend auf dem Kundeninformationsprofil.

Beide Verfahren werden vorzugsweise mittels eines Computersystems und Datenbanken bzw. Speichern durchgeführt.

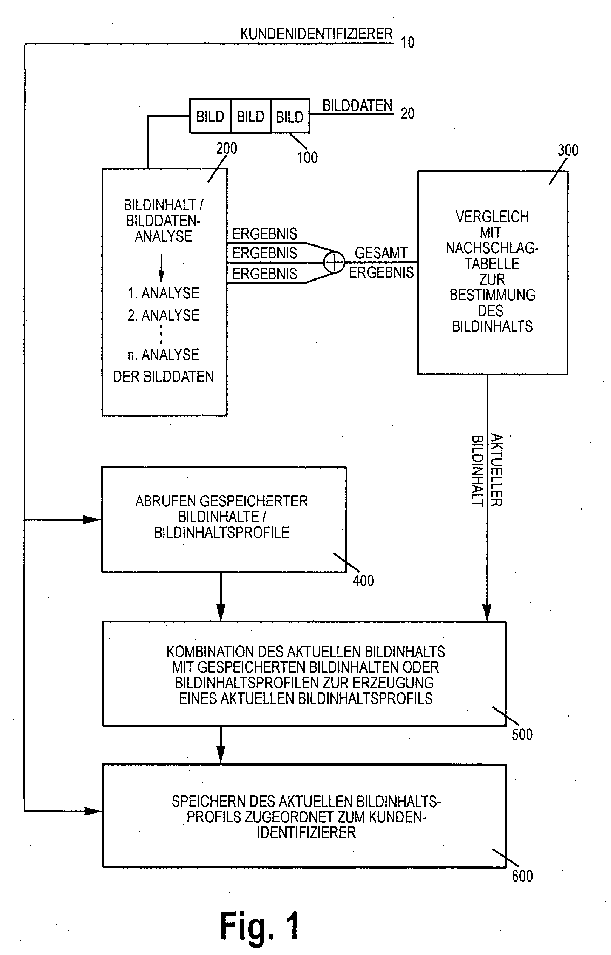

Fig. 1 veranschaulicht schematisch die Erzeugung eines kundenspezifischen Bildinhaltsprofils mit Schritten 200, 300, 400, 500 und 600 und/oder durch Zusammenwirken entsprechender Verarbeitungsblöcke (z.B. ASICs oder FPGAs). Beispielsweise wird von einem Computer über ein Netzwerk (Internet oder LAN oder via Handynetzwerk z.B. UMTS) ein Kundenidentifizierer 10 zusammen mit Bilddaten 20 empfangen. Die Bilddaten stellen eine Anzahl von fotografischen Bildern 100 dar, die z.B. mittels einer Kamera (Digitalkamera oder herkömmliche Kamera, Videokamera etc.) erzeugt wurden. Die Bilder 100 werden vorzugsweise durch digitale Bilddaten dargestellt, die beispielsweise durch scannen herkömmlicher Filme erzeugt werden, und einer Bildinhaltsanalyse 200 zugeführt. Die digitalen Bilddaten werden vorzugsweise verschiedenen Analyseverfahren unterzogen, z.B. einer Mustererkennung und einer Farbwertanalyse. Die verschiedenen Analyseergebnisse werden zu einem Gesamtanalyseergebnis kombiniert. Basierend auf dem Gesamtanalyseergebnis wird dann auf eine Nachschlagtabelle zugegriffen, die es erlaubt, eine Zuordnung zwischen dem Gesamtergebnis und dem Bildinhalt vorzunehmen. Beispielsweise kann das Gesamtanalyseergebnis als Vektor gestaltet werden, dessen Elemente für bestimmte charakteristische Analyseergebnisse (z.B. eine Komponente steht für Strandfarbe, die sich aus einer Farbanalyse ergab; eine weitere steht für Kleinkind, das sich aus einer Musteranalyse ergab; etc.). Der Merkmalsvektor wird dann mit in der Nachschlagtabelle gespeicherten Vektoren, die einem spezifischen Bildinhalt zugeordnet sind, verglichen. Es wird dann der gespeicherte Vektor ausgewählt, der dem Merkmalsvektor am ähnlichsten ist. Der Grad der Ähnlichkeit oder die Wahrscheinlichkeit der Übereinstimmung kann bei der Bestimmung des Bildinhaltsprofils z. B. als Wichtungsfaktor für den erkannten Bildinhalt miteinfließen. Alternativ oder zusätzlich kann auch durch Kombination gespeicherter Vektoren eine Annäherung an den Merkmalsvektor angestrebt werden (ähnlich zu dem Prinzip der Entfaltung bei der Spektralanalyse). Die der Kombination zu Grunde liegenden gespeicherten Vektoren dienen dann dazu, die Kombination von Bildinhalten festzulegen, die durch den Merkmalsvektor vermutlich dargestellt werden.

Mittels der Nachschlagtabelle lässt sich somit ein Bildinhalt bestimmen. Dieser kann zusätzlich mit einer Wichtung oder einem Wahrscheinlichkeitsgrad versehen werden, beispielsweise je nach Deckungsgrad des Gesamtergebnisses mit den in der Nachschlagtabelle gespeicherten Ergebnissen. Auch kann der Bildinhalt eine Kombination typischer Bildinhalte sein, wobei die einzelnen Kombinationsbestandteile wiederum mit einem Wichtungsfaktor und/oder einem Wahrscheinlichkeitsfaktor versehen sein können. Nach dem Vergleich des Analyseergebnisses mit den in der Nachschlagtabelle gespeicherten Ergebnissen kann somit ein einzelner Kennwert, der für einen typischen Bildinhalt steht, oder ein Kennvektor ausgegeben werden, dessen Komponenten jeweils für einen typischen Bildinhalt stehen und zusätzlich noch mit Wichtungsfaktoren versehen sein können. Der sich aus dem Vergleich mit der Nachschlagtabelle 300 auf diese Weise ergebende Bildinhalt des aktuellen Bildes wird dann vorzugsweise in einem nächsten Schritt bzw. nächsten Block 400 mit dem Kundenidentifizierer kombiniert, um ein kundenspezifisches Bildinhaltsprofil zu erzielen.

Hierzu wird vorzugsweise eine Datenbank für Bildinhalte mittels des Kundenidentifizierers abgefragt, um bereits gespeicherte kundenspezifische Bildinhalte abzurufen. Die gespeicherten Bildinhalte werden dann mit dem aktuellen Bildinhalt kombiniert, um ein aktualisiertes kundenspezifisches Bildinhaltsprofil zu erzielen, das auf der Bildinhaltanalyse einer Vielzahl von Bildern desselben Kunden basiert. Zur Erstellung des Bildinhaltsprofils können die einzelnen Bildinhalte in Abhängigkeit von der Häufigkeit, in der sie in den analysierten Bildern vorkommen, gewichtet werden.

In einem letzten Schritt 600 wird dann das (vorzugsweise im Schritt 500 aktualisierte) Bildinhaltsprofil zugeordnet zu dem Kundenidentifizierer abgespeichert. Dieses kundenspezifische Bildinhaltsprofil basiert auf einer Vielzahl von (typischen) Bildinhalten, die demselben Kundenidentifizierer zugeordnet sind und die sich vorzugsweise aus einer Analyse einer Vielzahl von Bildern ergaben.

Eine so erstellte Bildinhaltsprofil-Datenbank kann auf vielfältige Weise genutzt werden. Beispielsweise kann auf Grund von Erfahrungswerte, die beispielsweise durch Marktanalysen oder durch Befragungen erzielt wurden, den Bildinformationsprofilen ein kundenspezifisches Profil zugeordnet werden, das Aufschluss über Informationsbedürfnisse und Interessen von Kunden mit bestimmten Bildinhaltsprofilen gibt. Diese Zuordnung kann wiederum mittels Nachschlagtabellen automatisiert werden und die einzelnen Informationsbedürfnisse können mit Wichtungsfaktoren oder Wahrscheinlichkeitsfaktoren versehen werden. Ein auf diese Art und Weise bestimmtes Kundeninformationsprofil, das dem jeweiligen Kundenidentifizierer zugeordnet ist, wird vorzugsweise in einer Kundeninformationsprofil-Datenbank abgespeichert.

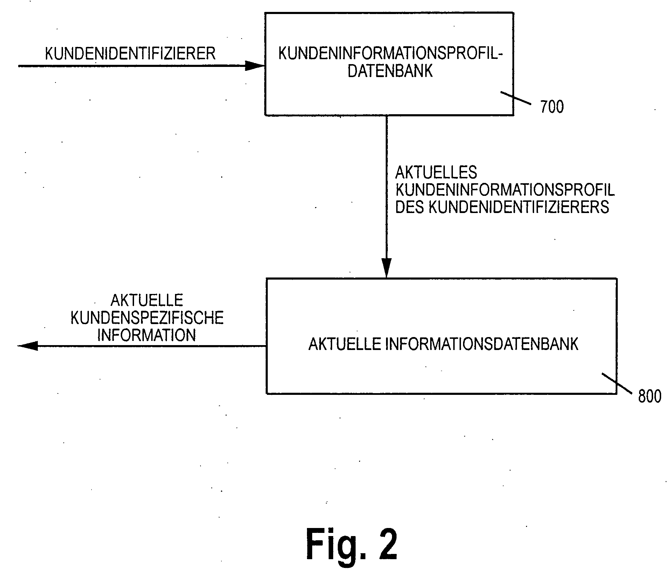

Fig. 2 zeigt ein Beispiel, wie eine derartige Kundeninformationsprofil-Datenbank benutzt werden kann.

Ein Kunde ist beispielsweise mit seinem Terminal (z. B. PC oder Handy) Online (z.B. via Internet) mit einem Internetshop, z.B. Internet-Fotoshop, verbunden. Der Kunde identifiziert sich mittels eines Kundenidentifizierers (beispielsweise Kennwort und Passwort). Während der Kunde von dem Internetshop einen gewünschten Service abruft, beispielsweise eine CD bereits gespeicherter Bilder, bestellt, wird mittels des Kundenidentifizierers die Kundeninformationsprofil-Datenbank 700 abgerufen. Das Kundeninformationsprofil des aktuellen Kunden wird einer aktuellen Informationsdatenbank zugeführt, in der aktuelle Informationen gespeichert sind. Diese aktuelle Informationsdatenbank wird mittels des Kundeninformationsprofils, das aktuell mit dem Computernetz der Internetsite (z.B. Shop) abgefragt. Die aktuelle Information, die sich auf Grund des Abfrageergebnisses ergibt und somit zu dem gespeicherten Kundeninformationsprofil passt, wird zu dem Kunden (z.B. zu dem Terminal des Kunden z.B. über Internet) zurückgesendet. Ergibt sich beispielsweise aus dem Bildinhaltsprofil, dass der Kunde häufig Katzen fotografiert, so wird in der Kundeninformationsprofil-Datenbank dies als Interesse an Katzen abgespeichert. Liegen nun in der aktuellen Informationsdatenbank beispielsweise aktuelle Angebote für Katzenfutter in der Nähe der Heimatadresse des Kunden vor, so wird dies als Werbung am Terminal des Kunden angezeigt. Alternativ zur Werbung können auch Fotografiertipps angezeigt werden, die sich auf typische Fotografierfehler beziehen, die bei der Bildanalyse festgestellt wurden und im Bildinhaltsprofil (Fotografiertechnik/-fehler-Profil) zugeordnet zum Kunden abgespeichert wurden.

Auch können mit Hilfe der kundenspezifischen Bildinhaltsprofile Kommentare zur Bildqualität oder Fotographietechniken zu einzelnen Bildern oder einem ganzen Film erzeugt werden und dem Kunden zusammen mit den Abzügen bzw. Prints gegeben werden. Falls beispielsweise eine Unterbelichtung in einem Bild festgestellt wird, kann ein für den Fall "Unterbelichtung" vorgesehener Text von einer Kommentardatenbank abgerufen werden, ausgedruckt und dem Print beigelegt werden, wobei der Text beschreibt, wie eine Unterbelichtung vermieden werden kann. Die Kommentare werden vorzugsweise den Kundenidentifizieren und/oder den einzelnen Bildern zugeordnet. Die Kommentarerzeugung kann auch ohne Empfang eines Kundenidentifizierens durchgeführt werden und sich nur auf den jeweiligen Bildinhalt eines Bildes und/oder ein Bildinhaltsprofil stützen.

## Patentansprüche

1. Verfahren zur Erzeugung eines Foto-Kundenprofils mittels Bilddatenverarbeitung mit folgenden Schritten:
a) ein Kundenidentifizierer (10) wird empfangen;
b) Bilddaten (20), die fotografische Bilder (100) darstellen und dem Kundenidentifizierer zugeordnet sind, werden empfangen;
c) die Bilddaten werden auf ihren Bildinhalt analysiert (200);
d) basierend auf den analysierten Bildinhalten wird ein kundenspezifisches Bildinhaltprofil erstellt (400, 500, 600).

2. Verfahren nach Anspruch 1, wonach durch Vergleich (300) der Analyseergebnisse mit einer Nachschlagtabelle, die basierend auf Analyseergebnisse für typische Bildinhalte erstellt wurde, der Bildinhalt bestimmt wird.

3. Verfahren nach Anspruch 1 oder 2, bei welchem verschieden Analyseverfahren auf die Bilddaten angewendet werden, deren Ergebnisse zu einem Gesamtanalyseergebnis zusammengefasst werden, basierend auf dem der Bildinhalt bestimmt wird.

4. Verfahren nach einem der Ansprüche 1 bis 3, bei dem zur Bestimmung des Bildinhaltsprofils eine Wichtung der in der Analyse erkannten Bildinhalte nach ihrer Häufigkeit in den fotografischen Bildern und/oder nach der Wahrscheinlichkeit, dass das Analyseergebnis korrekt ist, vorgenommen wird.

5. Verfahren nach einem der Ansprüche 1 bis 4, bei welchem durch Kombination (500) der für verschiedene Bilder eines Kunden bestimmten Bildinhalte ein kundenspezifisches Bildinhaltsprofil bestimmt wird.

6. Verfahren nach einem der Ansprüche 1 bis 5, bei welchem
basierend auf dem Bildinhaltsprofil eines Kunden ein Kundeninformationsprofil bestimmt wird;
das Kundeninformationsprofil von einer Kundeninformationsprofil-Datenbank (700) abgerufen wird,
wenn ein Kundenidentifizierer von einem Terminal empfangen wird, das dem Kundenidentifizierer zugeordnete Kundeninformationsprofil von der Kundeninformationsprofil-Datenbank (700) abgefragt wird;
basierend auf dem Kundeninformationsprofil eine aktuelle Informationsdatenbank (800) abgefragt wird und aktuelle Kundeninformationsdaten, die zu dem Kundeninformationsprofil passen, an das Terminal gesendet werden, von dem der Kundenidentifizierer empfangen wurde.

7. Programm, das, wenn es auf einem Computer oder Computersystem geladen ist, den Computer oder das Computersystem veranlasst, das Verfahren nach einem der Ansprüche 1 bis 6 durchzuführen.

8. Speichermedium zum Speichern von Programmen, auf dem das Programm nach Anspruch 7 gespeichert ist.

9. Signalwelle, die Informationen trägt, die ein Programm nach Anspruch 7 darstellen.

10. Vorrichtung zur Erzeugung eines Foto-Kundenprofils mittels Bilddatenverarbeitung mit:
a) einer Identifizierer-Empfangseinrichtung zum Empfangen von Kundenidentifizierern;
b) einer Bilddaten-Empfangseinrichtung zum Empfangen von Bilddaten, die fotografische Bilder darstellen und dem Kundenidentifizierer zugeordnet sind;
c) einer Analyseeinrichtung, die die Bilddaten auf ihren Bildinhalt analysiert;
d) einer Erzeugungseinrichtung, die basierend auf den dem Kundenidentifizierer zugeordneten Bildinhalten ein kundenspezifisches Bildinhaltprofil erstellt.
